# EUROPÄISCHE PATENTSCHRIFT

(11) **EP 0 639 257 B1**
(45) Veröffentlichungstag und Bekanntmachung des Hinweises auf die Patenterteilung: **07.02.1996**
(21) Anmeldenummer: 93909532.9
(22) Anmeldetag: 07.05.1993
(51) Int. Cl.: F27D 3/02, F27B 9/24, B65G 13/00

(54) **INDUSTRIEOFEN MIT ROLLELEMENTEN UND LAUFFLÄCHEN FÜR DEN TRANSPORT VON BRENNGÜTERN**
INDUSTRIAL FURNACE WITH ROLLER COMPONENTS AND RUNNING SURFACES FOR TRANSPORTING MATERIAL TO BE BURNT
FOUR INDUSTRIEL AVEC ELEMENTS ET SURFACES DE ROULEMENT POUR LE TRANSPORT DE MATIERES A BRULER

(30) Priorität: 08.05.1992 DE 9206202 U; 13.08.1992 DE 9210823 U
(43) Veröffentlichungstag der Anmeldung: 22.02.1995
(73) Patentinhaber: Bohn, Paul, D-90459 Nürnberg (DE)
(72) Erfinder: Bohn, Paul, D-90459 Nürnberg (DE)
(74) Vertreter: Merten, Fritz
(86) Internationale Anmeldenummer: DE9300405
(87) Internationale Veröffentlichungsnummer: WO9323714

(56) Entgegenhaltungen:
- EP-A- 0 020 803
- EP-A- 0 093 877
- FR-A- 846 911
- FR-A- 2 394 049
- GB-A- 188 074
- US-A- 1 342 041
- US-A- 2 632 234

## Beschreibung

### Beschreibung

Die Erfindung betrifft einen Industrieofen mit Rollelementen und Laufflächen für den Transport von Brenngütern (EP-A 0 093 877), entsprechen dem 1.ten Teil des Anspruch 1.

Es ist bekannt, daß herkömmliche Tunnelöfen mit Brennwagen, bestehend aus einem Stahlchassis, Radsätzen, einem Feuerfestaufbau und einer Isolierung, beschickt werden. Auf dem Brennwagenplateau ruhen die Brennhilfsmittel, wie Sohlzugsteine, Fußsteine mit Platten oder Setzgerüste mit ein- oder mehretagigen Setzplatten. Der Mehrschichtbesatz wird nach bestimmten Besatzschemen über Setz- und Entlademaschinen bewerkstelligt. Sandrinnenbleche sorgen für die seitliche Abdichtung der Brennwagen zum Ofenraum hin. Da diese Abdichtung ungenügend ist, wurde versucht, Abhilfe durch Schaffung eines Unterdrucks unter dem Wagenchassis und durch kippbare Blechschürzen zu schaffen. Unter den Chassis liegt bei den meisten Tunnelöfen der Begehkanal, um beim Einstürzen die Brennwagen besser abräumen zu können. Die Brennwagen, d.h. das Stahlchassis mit der Brennwagenisolierung müssen beim Brennen mit aufgeheizt werden und geben beim Verlassen des Ofens Wärme ab. Dies führt zu einer unbefriedigenden Energiebilanz.

Als Alternative zu diesen Tunnelöfen mit Mehrschichtbesatz wurden Rollenöfen mit einschichtigem Besatz entwickelt. Es wurden erhebliche Qualitätsverbesserungen bei gleichzeitiger Brennzeitverkürzung erzielt, wobei auch günstigere Abgaswerte erreicht wurden, was durch eine gleichmäßige Durchströmung noch verbessert wird. Bei diesen Rollenöfen wird das Brenngut auf rohrförmigen Rollen transportiert, die vom Ofenäußeren über Kettentriebe oder Zahnräder angetrieben werden. Von der Breite der Rohre kann etwa die Hälfte als Besatzbreite genutzt werden. Um den Durchsatz eines Tunnelofens zu erreichen, werden mehrere Etagen eingerichtet. Dies hat sich, vor allem durch den Antrieb, als relativ kostspielig und störungsanfällig erwiesen. Diese Rollenöfen sind darüberhinaus weitgehend auch auf das Brennen im Einschichtbesatz festgelegt.

Aufgabe der Erfindung ist es, einen Industrieofen mit Rollelementen und Laufflächen zum Transport von Brenngutträgern zu schaffen, der wenig aufwendig ist, der niedrig baut, der direkt auf dem Hallenboden installiert werden kann, der eine gute Energiebilanz aufweist, der wenig störungsanfällig ist und der sich besonders gut für den Einschichtbesatz und auch für besondere Formen des Brennens, wie das Hängend-Brennen eignet.

Diese Aufgabe wird mit dem im kennzeichnenden Teil des Anspruchs 1 genannten Merkmalen gelöst. Fortbildungen und besondere Ausführungen der Erfindung sind in den weiteren Ansprüchen umfaßt.

Erfindungsgemäß bestehen die Rollelemente zum Transport von Brenngutträgern aus Hochtemperaturkeramik wie Siliziumkarbid, einer Siliziumkarbidverbindung, einem Aluminiumoxyd oder einem vergleichbaren Material, oder aus einem hochtemperaturbeständigen Stahl, bzw. einer Legierung. Die Verwendung von keramischen Materialien für diesen Zweck erschien an sich ausgeschlossen, da deren Eigenschaften in der Regel neben großer Härte auch große Sprödigkeit sind. Die bei Industrieöfen auftretenden Temperaturunterschiede würden bei vielen keramischen Materialien außerdem zu Spannungen und Brüchen führen, wenn diese höheren Belastungen ausgesetzt werden. Überraschenderweise erfüllen Materialien aus Hochtemperaturkeramik wie Siliziumkarbid, bzw. Siliziumkarbidverbindungen sowohl die Ansprüche an Temperaturbeständigkeit, Härte, Druckund Verschleißfestigkeit, wie sie beim Einsatz als Rollelemente für den Transport von Brenngutträgern in Industrieöfen gestellt werden. Dies gilt auch für bestimmte hochtemperaturbeständige Stahlsorten, bzw. Legierungen.

Die erfindungsgemäßen Rollelemente können sowohl eine zylindrische Form, wie auch eine kugelige Form besitzen.

Die Laufflächen sind entlang der Ofeninnenwände angeordnet. Sind mehrere Brennkanäle im Ofen nebeneinander angeordnet und durch Trennelemente, wie Gerüste, voneinander getrennt, so sind die Laufflächen auch entlang der Trennelemente angeordnet. Selbstverständlich sind die Laufflächen immer paarweise auf gleicher Höhe angeordnet. Es ist auch möglich, mehrere Etagen übereinander anzuordnen. Die Laufflächen sind vorzugsweise Profilschienen, die als U- oder L-Profil ausgebildet sein können. Sind die Rollelemente stationär angeordnet, so weisen die Brenngutträger oder mit diesen verbundene Elemente die Laufflächen aus, sind die Brenngutträger oder mit diesen verbundene Elemente mit Rollelementen ausgestattet, so sind die Laufflächen als Schienen im Ofen angeordnet.

Nach einer ersten Ausführung der Erfindung sind eine Vielzahl von Rollelementen in mindestens zwei parallel in gleicher Höhe entlang der Länge eines Tunnelofens verlaufenden u-förmigen Schienen, deren Schenkel nach oben gerichtet sind, in Längsrichtung frei beweglich angeordnet. Auf den Rollelementen liegen Brenngutträger, z.B. in Balken- oder Palettenform auf.

Bei dieser Ausführung ist es vorteilhaft, zwischen den Rollelementen Distanzstücke in Form von Scheiben, Kugeln oder zylindrischen Körpern, deren Höhe geringer als der halbe Durchmesser der Rollelemente ist, anzuordnen.

Es ist möglich, bei dieser Ausführung die Rollelemente am Ofenaustritt in allseitig geschlossene Schienen einzuführen und unter dem Industrieofen zurück zum Ofeneintritt rückzuführen, so daß sich ein kontinuierlicher Umlauf ergibt.

Weitere Ausführungsformen der Erfindung werden ermöglicht, wenn die Rollelemente axiale Durchgangsbohrungen aufweisen, in denen Achsen angeordnet sind. Die zugehörigen Brenngutträger können palettenartig ausgebildet sein oder das Brenngut oder die Brenngutträger können auf einem oder mehreren Balken angeordnet sein.

Zum Beispiel können die Achsen von mindestens zwei Rollelementen seitlich an der Unterseite von Brenngutträgern oder Balken gelagert sein, wobei jeweils Rollelemente an jeder der Ofeninnenwand zugewandten Seite angeordnet und die Brenngutträger mit den Rollelementen auf seitlich in den Wänden und/oder zusätzlichen mittleren Traversen angeordneten Schienen in Industrieöfen verschiebbar gelagert sind.

Nach einer weiteren Ausführungsform der Erfindung sind eine Vielzahl von Rollelementen in seitlich in den Ofenwänden parallel auf gleicher Höhe angeordneten Reihen von Lagerböcken drehbar gelagert. Hier ist es vorteilhaft, wenn die Lagerböcke an den Enden von in Durchbrüchen der Ofenwand entfernbar gelagerten Durchführungsrohren angeordnet sind. Die Durchführungsrohre sind nach einer besonderen Ausführungsform in in die Durchbrüche eingesetzten rechteckigen Muffeln gelagert. Hier, wie in der vorher genannten Ausführungsform, ist es vorteilhaft, wenn die Durchführungsrohre einen geringeren Durchmesser aufweisen, als die innere Höhe der Muffeln und wenn die Durchführungsrohre wenigstens im Bereich der Lagerböcke mittels unter ihnen angeordneten, zueinander verschiebbaren Keilen aus einer oben in der Muffel liegenden Position in eine tiefer als diese liegende Position und umgekehrt bewegbar sind. Durch diese Maßnahme können die Lagerböcke im Ofeninneren abgesenkt werden und leicht zur Kontrolle oder zum Ersatz der Rollelemente herausgenommen werden.

Nach einer weiteren Ausführung der Erfindung sind eine Vielzahl von Rollelementen jeweils in einem Abstand voneinander auf in Industrieöfen verlaufenden Schienen angeordnet und zwischen jeweils zwei Rollelementen sind Verbindungsglieder angeordnet, die an ihren Enden in die Durchgangsbohrungen eingreifen. Die derart kettenförmig zusammengefaßten Rollelemente werden an den Enden der Schienen umgelenkt und unterhalb dieser wieder zurückgeführt, wodurch eine umlaufende Rollenkette gebildet wird.

Eine weitere Ausführung der Erfindung liegt darin, daß mehrere Rollelemente in einem oben offenen Gehäuse um eine in dem Gehäuse, wenigstens oben teilweise gerade und an den Seiten abgerundete Laufbahn angeordnet sind, daß weiter zwischen jeweils zwei Rollelementen zylindrische, achsparallel ausgerichtete Distanzkörper angeordnet sind und daß in dem offenen Bereich des Gehäuses stets mindestens zwei Rollelemente in gleicher Höhe über dieses vorstehen und die Auflage für Brenngutträger bilden. Durch diese Ausführungsform können insbesondere schwerere Körper transportiert werden, wenn z.B. an den Wänden des Industrieofens in gleicher Höhe mehrere Gehäuse angeordnet sind.

Der erfindungsgemäße Industrieofen wird vorteilhafterweise so ausgeführt, daß die Brennkammer, oder die nebeneinander angeordneten Brennkammern auf einem Gerüst auf dem Boden stehen, wobei der Raum unterhalb der Brennkammern begehbar ist. Bei dieser Ausführung ist es möglich, den Ofenboden in Segmente aufzuteilen, die entlang von Laufflächen, mit Rollen oder einfachen Gleitflächen, entlang des Gerüstes verschiebbar sind. Die Segmente können dann auseinandergezogen werden, wenn zum Beispiel Brenngut umgestürzt und der Ofen blockiert ist und das umgestürzte Brenngut kann einfach entfernt werden.

Als besonders vorteilhaft erweist es sich, Brenngut hängend zu brennen. Je nach Anordnung der Profilschienen kann längeres oder kürzeres Brenngut verarbeitet werden. Dachziegel, wie zum Beispiel sogenannte Biberschwänze, können mit Aussparungen in zwei parallele Balken eingehängt und gebrannt werden. Dabei wird deren Kopf, der mit den Aussparungen ausgestaltet ist, nach dem Brennen abgeschlagen. Das Hängend-Brennen ermöglicht eine besonders gute Qualität. Darüber hinaus ist es möglich, das Brenngut auf beiden Seiten zu glasieren. Für das Hängend-Brennen ist es vorteilhaft, die Profilschienen mit Zwischenträgern oder Verbindungselementen im oberen Bereich der Ofeninnenwände oder an der Ofendecke aufzuhängen.

Der beschriebene Industrieofen weist gegenüber den herkömmlichen Öfen viele wirtschaftliche und ökologische Vorteile auf. Ein Beispiel ist das Entfallen von Brenngutkassetten bei der Dachziegelherstellung durch das Hängend-Brennen dieser Ziegel. Viele teure Aggregate werden überflüssig, so die Brennwagen mit Brennhilfsmitteln, die Ofengleise, die Sandrinnenbleche, die Außen- und Schiebebühnengleise, die Schiebebühnen und die Setzund Entlademaschinenn beim Tunnelofen und der Rollenantrieb und die Öffnungen in den Ofenwänden beim Rollenofen.

Die verschiedenen Elemente, wie Balken, Profilschienen, Platten usw. sind je nach Bedarf ebenso wie die Rollelemente in Hochtemperaturkeramik auszuführen.

Im Folgenden wird die Erfindung anhand von Zeichnungen näher erläutert. Dabei zeigen:
- Fig. 1) u. Fig. 2): ein zylindrisches Rollelement mit Durchgangsbohrung und eingesteckter Achse;
- Fig. 3) u. Fig. 4): Rollelemente in Führungsschienen mit Rollenbalken;
- Fig. 5): Rollelemente mit Distanzstücken;
- Fig. 6): einen Brenngutträger auf Rollelementen;
- Fig. 7) u. Fig. 8): zu einer Kette verbundene Rollelemente;
- Fig. 9): ein Rollelement auf einem mit einem Durchführungsrohr durch die Ofenwand verbundenen Lagerbock;
- Fig. 10) u. Fig. 11): eine Rollenbox, bei der stets mindestens zwei Rollelemente im Einsatz sind.
- Fig. 12) b. Fig. 15): einen Palettenwagen mit Rollen auf Profilschienen;
- Fig. 16) u. Fig. 17): ein Rollenumlaufsystem mit Rückführung der Rollelemente;
- Fig. 18) u. Fig. 19): ein System mit stationären Rollen und Schubpaletten;
- Fig. 20) u. Fig. 21): eine erste Ausführung für das Hängend-Brennen;
- Fig. 22) u. Fig. 23): eine zweite Ausführung für das Hängend-Brennen;
- Fig. 24): einen Industrieofen mit mehreren Brennkammern.

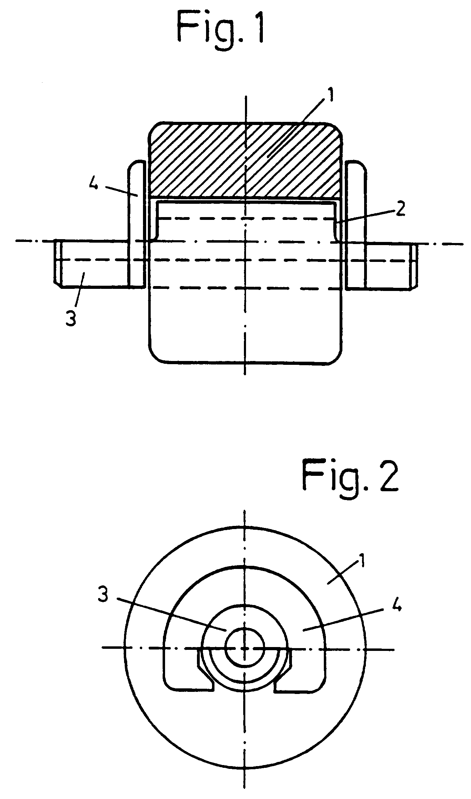

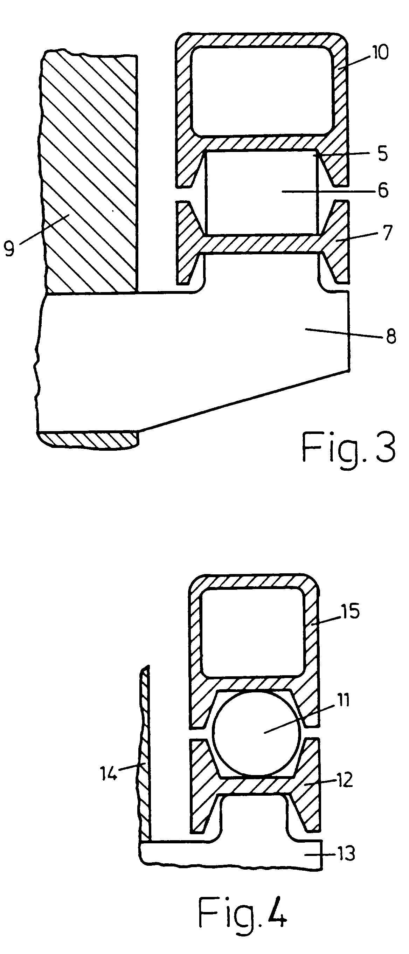

Fig. 1 und Fig. 2 zeigen ein zylindrisches Rollelement 1 mit einer Durchgangsbohrung 2, in die eine Achse 3 gesteckt ist, die im Mittelteil zylindrisch und an den Enden halbzylindrisch ausgeführt ist. Am Austritt der Achse 3 aus der Durchgangsbohrung 2 sind Anlaufscheiben 4 auf diese aufgesteckt. Dieses Rollelement 1 kann mit seiner Achse 2 in Lagerböcken, Lagerbuchsen oder dergleichen von Balken oder Platten oder anderen Elementen von Brenngutträgern gelagert werden, so daß die Brenngutträger auf z.B. Schienen rollen können.

Fig. 3 und Fig. 4 zeigen Varianten einer losen Führung von Rollelementen 6, 11 in Spurschienen 7, 12, die auf in der Ofenwand 9, 14 verankerten Kragsteinen 8, 13 gelagert sind. Es sind hier ein zylindrisches Rollelement 6 und ein kugeliges Rollelement 11 gezeigt. Auf den Rollelementen 6, 11 liegen Schubbalken 10, 15, die Bestandteil eines Brenngutträgers sein können, auf denen aber auch Brenngutträger aufliegen können. Die Spurschienen 7, 12 verlaufen beispielsweise auf gleicher Höhe entlang der Wände eines Tunnelofens, wobei je nach Belastung und Stärke mehr oder weniger Kragsteine eingesetzt sind. Die Schubbalken 10, 15 können dann auf den in einer Vielzahl aneinanderliegenden Rollelementen 6, 11 durch den Ofen geschoben werden, wobei am Ofenende die herausfallenden oder herausgeführten Rollelemente 6, 11, wie auch die Schubbalken 10, 15 wieder zum Ofenanfang zurückgeführt werden.

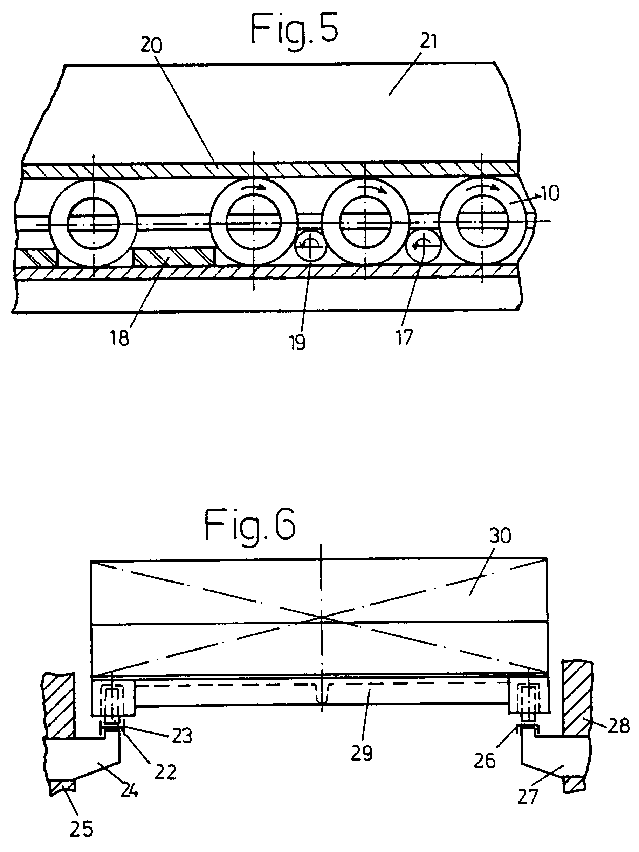

Fig. 5 zeigt eine ähnliche Anordnung, wie zu Fig. 3 und Fig. 4 beschrieben, wobei hier zwischen den zylindrischen und mit einer Durchgangsbohrung versehenen Rollelementen 16 Distanzstücke in Form von Nadeln 17 oder Scheiben 18 eingesetzt sind. Dadurch kann die Zahl der Rollelemente 16 herabgesetzt werden. Die Distanzstücke sind ebenfalls aus Siliziumkarbid. Die Anordnung der Spurschiene 19 und des Schubbalkens 20 entspricht dem vorher gezeigten.

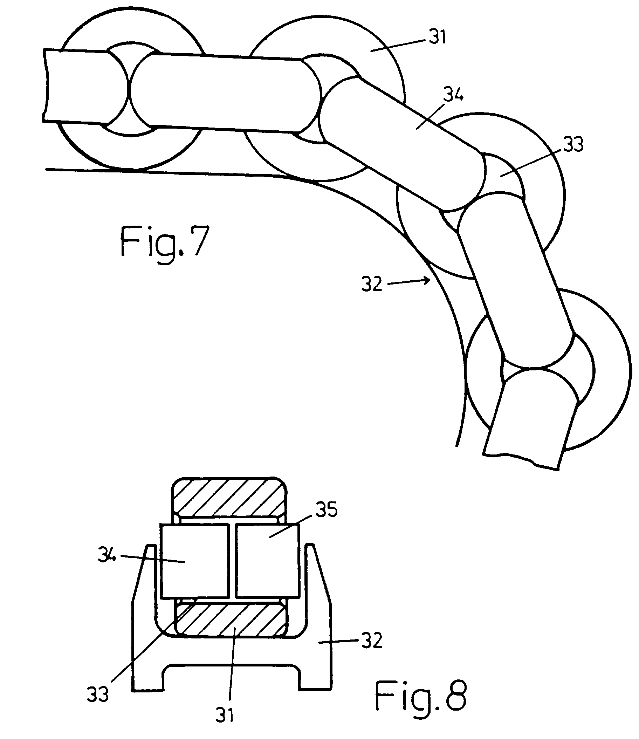

In Fig. 6 sind ebenfalls in beiden Wänden 25, 28 eines Tunnelofens auf gleicher Höhe Reihen von Kragsteinen 24, 27 eingesetzt, auf denen Schienen 23, 26 lagern. Auf den Schienen 23, 26 ist hier eine Brenngutplatte 29 geführt, an deren vier Ecken Rollelemente 22 in Lagerböcken, wie zu Fig. 1 und Fig. 2 ausgeführt, gelagert sind. Dabei ist eine Schiene als Spurschiene 23 auszuführen, während die andere Schiene 26 keine zusätzlichen Führungsschenkel benötigt. Dies ist insofern von Vorteil, als einer seitlichen, wärmebedingten Ausdehnung der Brenngutplatte 29 genügend Spiel verbleibt. Auf der Brenngutplatte 29 ist, z.B. im einschichtigen Besatz, Brenngut 30 angeordnet. Die Brenngutplatte kann gleichzeitig auch zum Trocknen des feuchten Brennguts verwendet werden.

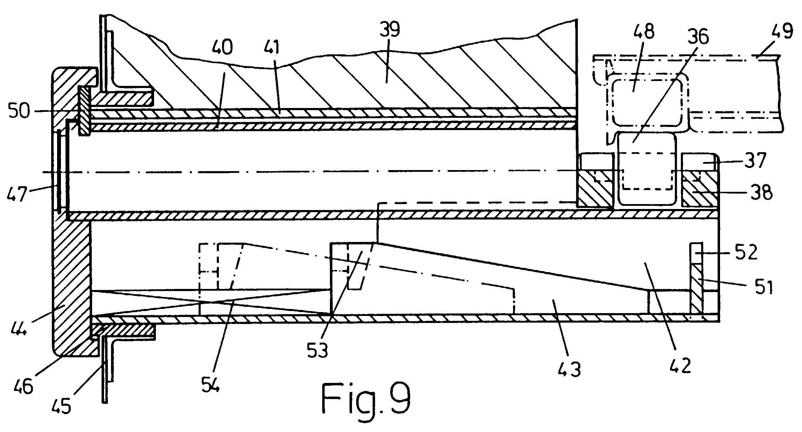

Fig. 7 und Fig. 8 zeigen zylindrische Rollelemente 31, die mit Durchgangsbohrungen 33 versehen sind. In die Durchgangsbohrungen 33 von jeweils zwei Rollelementen 31 greifen jeweils zwei einwärts gerichtete kreisförmige Abwälznocken 35 von Verbindungsgliedern 34, wodurch die Rollelemente 31 kettenförmig aneinandergereiht werden. Die gewünschte Teilung der Kette kann durch die Wahl des Abstandes der Verbindungsglieder 34 bestimmt werden. Die Rollelemente laufen in einer Spurschiene 32 aus Verschleißkeramik, die an ihren Enden halbkreisförmig abgebogen ist, so daß die Kette rückwärts laufen kann, wodurch eine Endloskette gebildet wird. Durch diese Anordnung wird ein Einsammeln und einzelnes Zurückführen und wieder Einfädeln der Rollelemente auf die Spurschiene vermieden.

In Fig. 9 ist die Ausführung der Erfindung dargestellt, bei der zylindrische Rollelemente 36, die eine Durchgangsbohrung mit eingesteckter Achse 37 aufweisen, in Lagerböcken 38 gelagert sind, die an den Enden von Durchführungsrohren 40 befestigt sind, die durch die Wände 39 des Ofens geführt sind, wobei die Lagerböcke 38 an oder nahe der Ofeninnenwand angeordnet sind. Im Bereich der Lagerböcke 38 mit den Rollelementen 36 sind die Durchführungsrohre 40 in ihrem oberen Bereich um einen Zylinderabschnitt derart verringert, daß die Rollelemente 36 über die Seiten der Durchführungsrohre 40 heraustreten. Dadurch können Brenngutträger, z.B. bestehend aus Längsbalken 48, die mit Paletten 49 verbunden sind, auf den Rollelementen aufliegen. Die Durchführungsrohre 40 sind in rechteckigen Muffeln 41, die in Durchbrüchen der Ofenwände 39 gelagert sind, angeordnet. Die lichte Höhe der Muffeln 41 ist größer als der Durchmesser der Durchführungsrohre 40 und diese sind an der oberen Seite der Muffeln 41 angeordnet und nach unten durch die gerade Fläche eines Auflagekeils 42 abgestützt, dessen Schräge von der zum Ofeninneren gerichteten Seite von unten zur auf der dem Ofeninneren abgewandten Seite nach oben verläuft. Der Auflagekeil 42 liegt wiederum auf einem Schubkeil 43, dessen Schräge entsprechend auf seiner oberen Seite angeordnet ist. An seinem dem Ofeninneren zugewandten Ende, weist der Auflagekeil 42 ein kurzes gerades Stück auf, in das ein Schlitz 52 für eine Keilführung 51 eingeschnitten ist. Wird, wie in der Zeichnung angedeutet, der Schubkeil 43 nach Öffnung der ofenaußenseitigen Verblendung nach außen gezogen, wofür er mit einer Einhaköffnung 53 für einen Haken versehen ist, so senkt sich der Auflagekeil 42 und mit ihm das Durchführungsrohr 40 mit dem Lagerbock 38 ab und das Durchführungsrohr 40 kann einfach herausgezogen werden, ohne daß es durch Brenngutträger gehindert wird. Die Verblendung an der Ofenaußenseite ist so aufgebaut, daß gut wärmeleitende Materialien von hitzeempfindlichen Materialien isoliert sind. Die Verblendung besteht aus einem Deckel 44, aus z.B. Calziumkarbonat mit einem Schauglas 47, der das Durchführungsrohr 40, aus z.B. Siliziumkarbid, die Muffel 41, aus z.B. Korund und einen Isolierrahmen 46, aus z.B. Calziumkarbonat umfaßt, wobei ein Riegel, ebenfalls z.B. aus Calziumkarbonat, den Deckel mit den anderen Teilen verbindet. Erst außerhalb des Isolierrahmens 46 verläuft das Blech 45 der Ofenaußenwand.

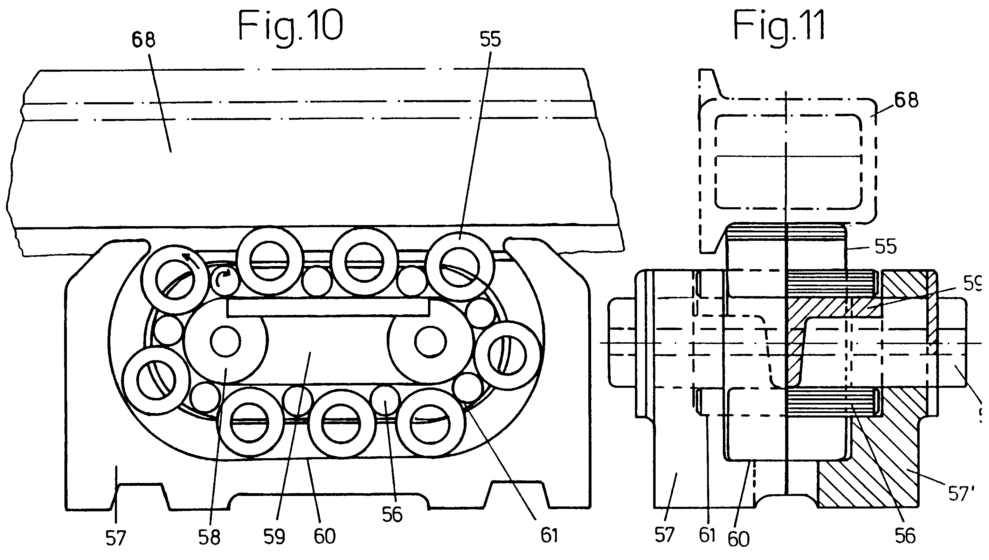

Fig. 10 und Fig. 11 zeigen eine Rollenbox bestehend aus einem zweiteiligen Gehäuse, dessen Gehäusehälften 57, 57' mittels zweier Steckachsen 58 verbunden sind. Die Steckachsen 58 können außen durch z.B. Steckscheiben gesichert werden. Die Steckachsen dienen gleichzeitig als Auflager für einen Druckkörper 59, bestehend aus einer Druckplatte und einen nach unten gerichteten Keil, der zwischen den Steckachsen 58 liegt. Die Gehäusehälften 57, 57' weisen eine innere, umlaufende Nut 61 auf, in denen Nadeln 56 geführt werden. Zwischen sich schließen die Gehäusehälften 57, 57' an ihrem Boden und an den Längsseiten eine Rollbahn 60 ein, auf der Rollelemente 55, zwischen denen jeweils Nadeln 56 geführt sind, entlang des Bodens und an den Längsseiten halbkreisförmig herumgeführt und entlang der Steckachsenoberflächen auf die Platte des Druckelements 59 geführt werden. Auf der Platte des Druckelements 59 sind stets mindestens zwei Rollelemente 55 auf gleicher Höhe geführt und ragen ein Stück über die Gehäusehälften 57, 57' heraus und tragen dort z.B., einen Balken 68 eines Brenngutträgers. Die Rollelemente 55 werden so in der Rollenbox durch die Vorschubbewegung des Balkens 58 entlang der Rollbahn 60, der Steckachsenoberflächen und der Platte des Druckelements 59 stetig herumgeführt. Der Vorteil der Rollenbox liegt darin, daß hier punktuell hohe Gewichte aufgenommen werden können und eine Anordnung von solchen Rollenboxen entlang der Wände eines Tunnelofens in größerem Abstand geschehen kann, als bei der Ausführung nach Fig. 9.

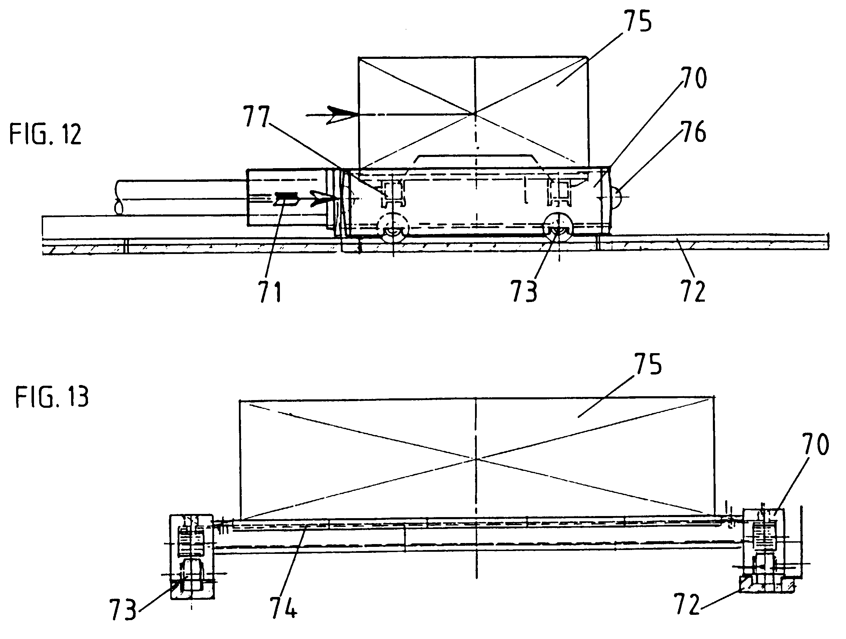

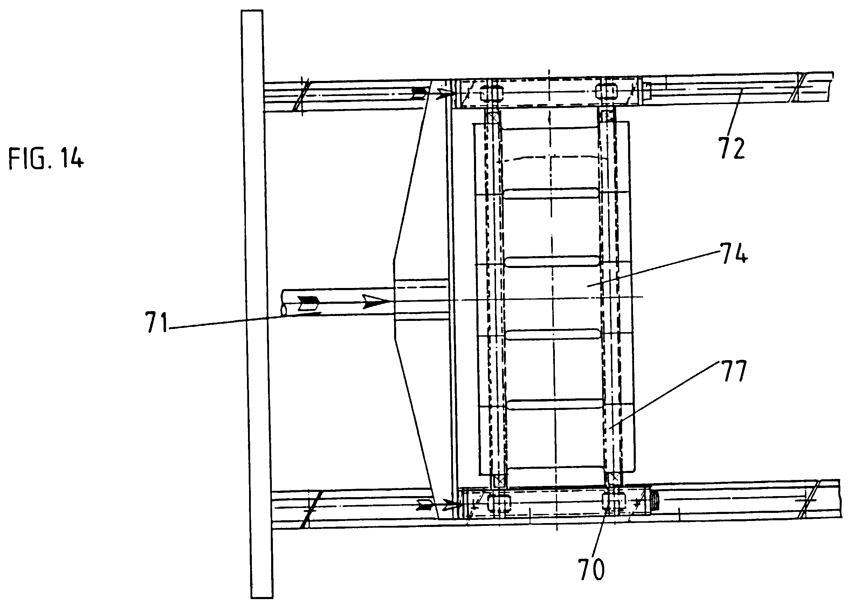

Der in Fig. 12 bis 15 dargestellte Palettenwagen ist an seiner Unterseite seitlich mit jeweils zwei Rollelementen 73 mit Achsen wie in Fig. 1 und 2 dargestellt, versehen. Die Rollelemente 73 sind in seitlichen Rahmenteilen 70 gelagert. Zwischen den Rahmenteilen 70 spannen sich zwei parallel in einem Abstand zueinander angeordnete Balken 77 über das Ofeninnere. Die Balken 77 sind auf Böcken in den Rahmenteilen 70 gehalten. Die Rollelemente 73 laufen in Profilschienen 72, die in gleicher Höhe parallel an den Ofeninnenwänden angeordnet sind. Über die Balken 77 sind Platten 74 gelegt, auf denen das Brenngut 75 gelagert ist. Die Rahmenteile 70 weisen vorne Nasen 78 und hinten Einbuchtungen 79 auf, wobei jeweils die Nasen 78 und Einbuchtungen 79 zweier Palettenwagen ineinandergreifen können. Während jeweils der erste Palettenwagen an der Ofeneinfahrt von einer Schubmaschine 71 angeschoben wird, schieben sich die weiteren Palettenwagen im Ofeninneren über die Nasen 78 und Ausbuchten 79 gegenseitig weiter.

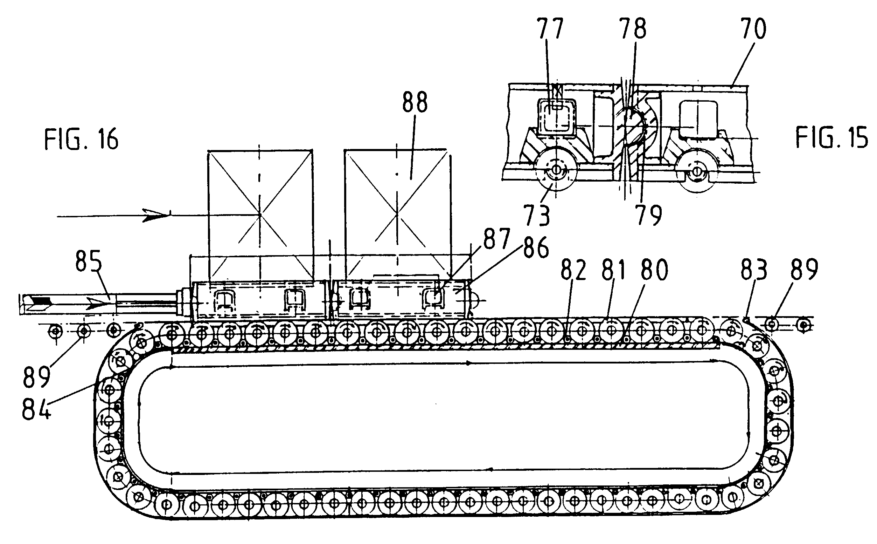

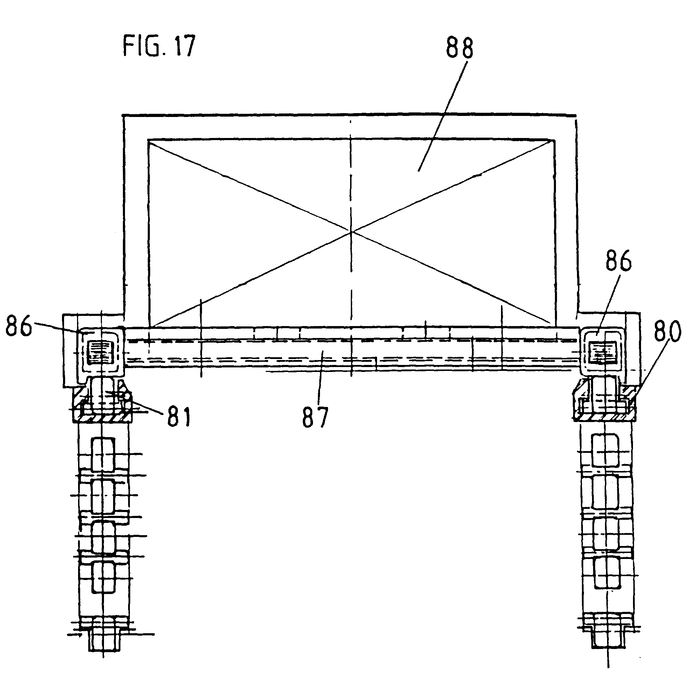

Bei dem Umlaufsystem gemäß Fig. 16 und 17 werden Palettenwagen mit Rahmenteilen 86 und Balken 87 verwendet, die denen gemäß Fig. 12 bis 15 entsprechen, mit der Ausnahme, daß hier keine Rollelemente an den Palettenwagen vorgesehen sind, sondern daß deren Rahmenteile 86 an den Unterseiten mit Profilflächen mit L-förmigem Querschnitt versehen sind, die auf Rollelementen 81 laufen, die in parallel auf gleicher Höhe seitlich an den Ofeninnenwänden angebrachten Profilschienen 80 drehbar und längsbeweglich angeordnet sind. Die Rollelemente 81 sind demgemäß auch nicht mit Achsen versehen. Zwischen den Rollelementen 81 befinden sich jeweils zylindrische Distanzrollen 82. Die Profilschienen 80 sind im wesentlichen U-förmig im Querschnitt, wobei die Seitenwände möglichst weit nach innen gezogen sind, so daß die Rollelemente 81 zwischen schmalen Spalten aus dem Profil ragen. Damit wird das Eindringen von Verschmutzungen verhindert. An den Enden der Profilschienen 80 ist jeweils abwärts gerichtet ein Ein- und ein Auslauf 83 einer geschlossenen Schiene 84 angeordnet. Die geschlossenen Schienen 84 laufen unter dem Ofenboden um diesen herum und verbinden die beiden Enden der Profilschienen 80. Die Rollelemente 81 und die Distanzrollen 82 werden durch die geschlossenen Schienen 84 kontinuierlich rückgeführt, wodurch sich ein Kreislauf ergibt. Für den Transport der Palettenwagen zu den Rollelementen 81 in den Profilschienen 80 sind, ebenso, wie am Ofenausgang, Rollelemente 89 in einem Gerüst oder dergleichen angeordnet, so daß die Palettenwagen stets auf der gleichen Höhe bewegt werden. Wie in der vorher beschriebenen Ausführung werden die Palettenwagen, mit Brenngut 88 beladen, durch eine Schubmaschine 85 vorgeschoben.

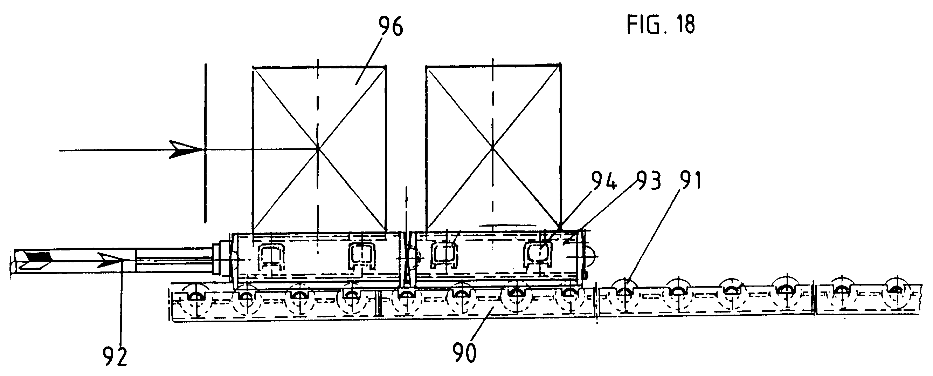

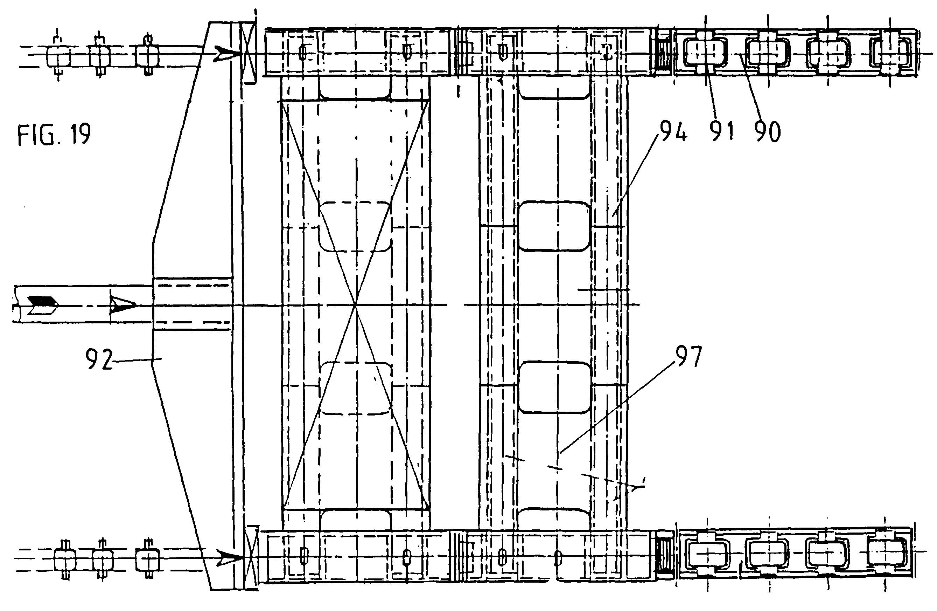

In Fig. 18 und 19 ist ein Palettenwagen gezeigt, der dem gemäß Fig. 16 und 17 entspricht, d.h. die die Rahmenteile 83, Balken 94, die Schubmaschine 92 und das Brenngut 96 aufweisen. Auf den Balken 94 sind Platten 97 für das Brenngut 96 angeordnet. Unterschiedlich ist bei der hier gezeigten Ausführungsform, daß die Rollelemente 91 zwar drehbar, aber nicht längsbeweglich in Profilschienen 90 mit U-förmigen Querschnitt angeordnet sind. Die Rollelemente 91 liegen mit ihren Achsen, wie in Fig. 1 und 2 gezeigt, in Lagerausnehmungen der Profilschienen 90. Je nach zu erwartender Belastung durch Brenngut und Palettenwagen ist der Abstand zwischen den Rollelementen 91 größer oder kleiner.

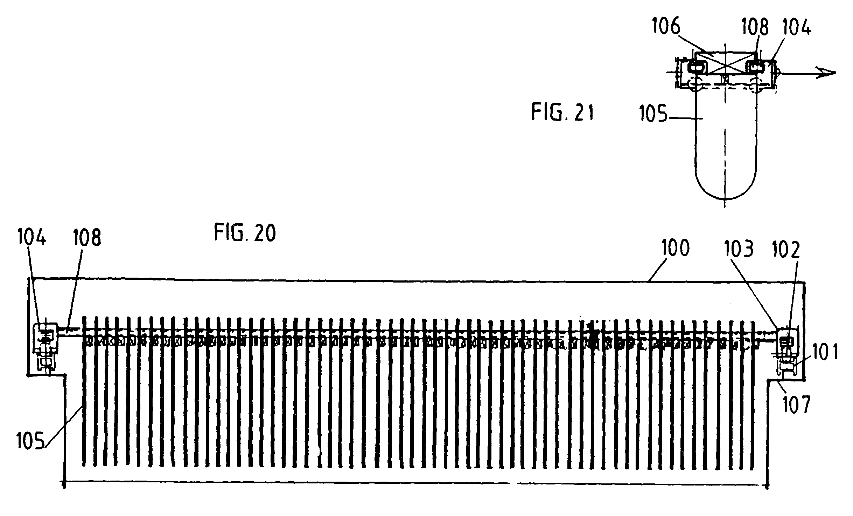

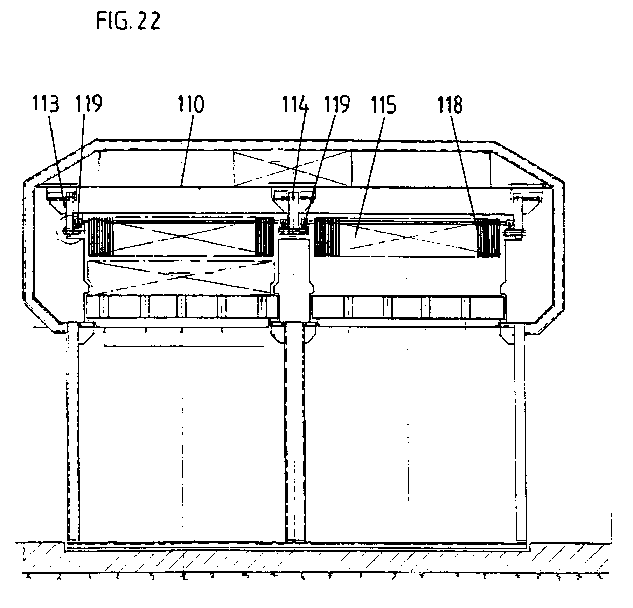

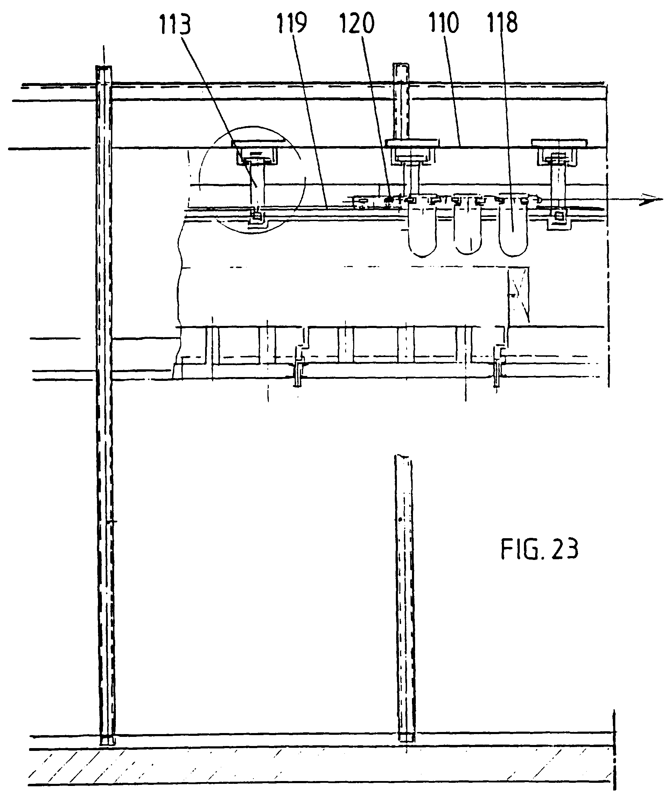

In Fig. 20 und 21 ist eine erste Ausführung für das Hängend-Brennen gezeigt. Hier sind Profilschienen 101 mit H-förmigem Querschnitt auf Absätzen 107 in der Ofeninnenwand angeordnet. Die Palettenwagen bestehen hier aus Rahmenteilen 104 mit Rollelementen 102, wobei die Rahmenteile 104 von zwei parallelen Balken 108 verbunden werden. Die Balken 108 haben einen Abstand zueinander, der es ermöglicht, Dachziegel, nämlich sogenannte Biberschwänze 105 zwischen diese zu hängen, wobei die Biberschwänze 105 an ihrem Kopf Aussparungen aufweisen, mit denen sie aus die Balken 108 förmlich aufgefädelt werden. Entlang der Balken 108 sind dann beim Brennen etliche Biberschwänze 105 angeordnet, deren Köpfe nach dem Brennen abgeschlagen werden. Die Palettenwagen können selbstverständlich auch nach einer der anderen vorher beschriebenen Arten mittels Rollen und Laufflächen verschiebbar gestaltet sein. Dies gilt auch für die zweite Ausführung zum Hängend-Brennen gemäß Fig. 22 und 23. Die Palettenwagen 120 und sein Besatz mit Brenngut 118 sind hier ebenso aufgebaut, wie in Fig. 20 und 21 beschrieben. Die Profilschienen 119 sind jedoch mit Zwischenträgern 113 über Steckverbindungen verbunden und an der Ofendecke 110 aufgehängt.

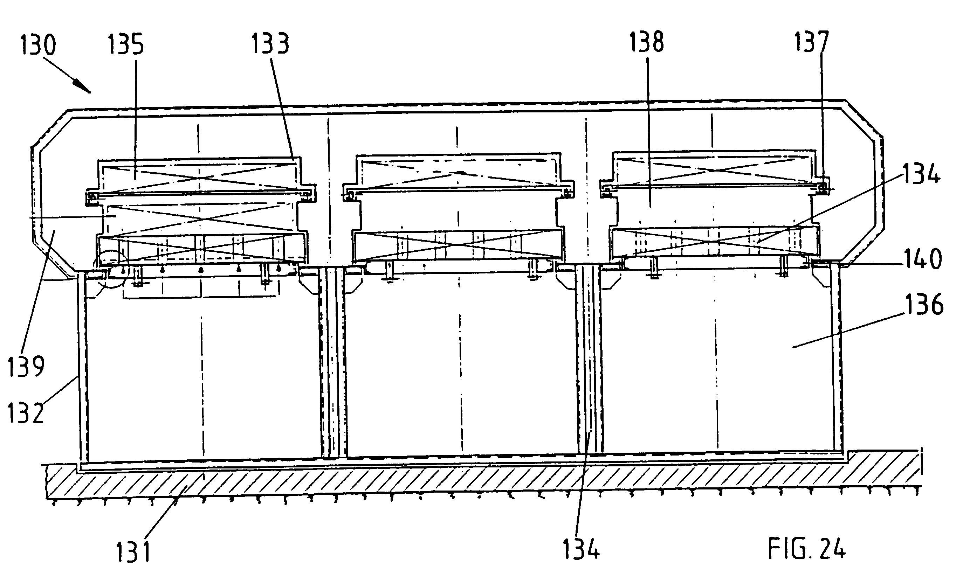

Fig. 24 zeigt einen Industrieofen 130 mit drei parallel nebeneinander angeordneten Brennkammern 133. Die Brennkammern 133 mit ihrem Gehäuse und ihren Isolierungen sind auf einem Gerüst mit Stützen 132 angeordnet, wobei der Hallenboden 131, bzw. der Raum 136 unterhalb der Brennkammern begehbar ist. In den Brennkammern 133 sind Palettenwagen 135, wie oben in verschiedenen Ausführungsformen beschrieben, verschiebbar angeordnet. Der Ofenboden wird durch Segmente 134 gebildet, die auf an den Stützen gelagerten Gleitschienen 140 verschiebbar gelagert sind. Zwischen den Segmenten 134 und den Palettenwagen 135, bzw. beim Hängend-Brennen dem Brenngut, ist ein freier Raum (Wanne) 138 angeordnet. Brenngut, das umfällt kann dadurch in die Wanne 138 fallen und durch Auseinanderziehen der Segmente 134 entfernt werden. Die Segmente 134 des Ofenbodens sind mit Durchtrittsöffnungen für Brenner ausgestattet. Der freie Raum (Wanne) 138 kann durch Sperrschürzen abgedichtet sein, um die Rauchgase zu lenken.

## Patentansprüche

1. Industrieofen mit Rollelementen und zugehörigen Laufflächen für den Transport von Balken oder Paletten mit Brenngütern,
wobei die Rollelemente (1, 6, 11, 16, 22, 31, 36) aus Hochtemperaturkeramik wie Siliziumkarbid, einer Siliziumkarbiderbindung, einem Aluminiumoxyd oder einem vergleichbaren Material, oder aus einem hochtemperaturbeständigen Stahl, bzw. einer Legierung bestehen und zylindrische oder kugelige Form besitzen,
**dadurch gekennzeichnet,**
daß die Rollelemente u. d. dazugehörenden Laufflächen f. d. Balken oder Paletten seitlich an den Ofeninnenwänden angeordnet sind,
und daß wenigstens eine Lauffläche ein L- oder H-Profil zur seitlichen Führung der Rollelemente besitzt.

2. Industrieofen nach Anspruch 1,
**dadurch gekennzeichnet,**
daß die Laufflächen Schienen sind, die an den Ofeninnenwänden angeordnet sind,
und daß die Rollelemente in die Unterseiten der Balken oder Paletten integriert sind.

3. Industrieofen nach Anspruch 1,
**dadurch gekennzeichnet,**
daß die Laufflächen an den Unterseiten der Balken oder Paletten angeordnet sind,
und daß die Rollelemente an den Ofeninnenwänden angeordnet sind.

4. Industrieofen nach Anspruch 1,
**dadurch gekennzeichnet,**
daß mindestens zwei Brennkanäle nebeneinander angeordnet sind,
daß sich zwischen den Brennkanälen Trennelemente wie Gerüste befinden,
und daß die Laufflächen entlang der Ofeninnenwände und Trennelemente angeordnet sind.

5. Industrieofen nach Anspruch 1,
**dadurch gekennzeichnet,**
daß eine Vielzahl von Rollelementen (6, 11, 16) in mindestens zwei parallel in gleicher Höhe entlang der Länge eines Industrieofens verlaufenden u-förmigen Profilschienen (7, 12, 19), deren Schenkel nach oben gerichtet sind, in Längsrichtung frei beweglich angeordnet sind,
daß auf den Rollelementen (6, 11, 16) Paletten (10, 15) aufliegen,
und daß zwischen den Rollelementen (16) Distanzstücke in Form von Scheiben (18), Kugeln oder zylindrischen Körpern (17) angeordnet sind, deren Höhe geringer als der halbe Durchmesser der Rollelemente (16) ist.

6. Industrieofen nach Anspruch 5,
**dadurch gekennzeichnet,**
daß die Rollelemente (16) am Ofenaustritt in allseitig geschlossene Schienen (84) eingeführt und zum Ofeneintritt rückgeführt werden, so daß sich ein kontinuierlicher Kreislauf ergibt.

7. Industrieofen nach Anspruch 1,
**dadurch gekennzeichnet,**
daß die Rollelemente (1, 36) axiale Durchgangsbohrungen (2) aufweisen,
und daß in die Durchgangsbohrungen (2) Achsen (3, 37) oder Hohlachsen eingesteckt sind.

8. Industrieofen nach Anspruch 7,
**dadurch gekennzeichnet,**
daß die Achsen von mindestens zwei Rollelementen (22) seitlich an der Unterseite von Paletten (29) oder Balken gelagert sind, wobei jeweils Rollelemente (22) an jeder der Ofeninnenwand zugewandten Seite angeordnet sind,
und daß die Paletten (29) oder Balken mit den Rollelementen (22) auf seitlich in den Wänden (25, 28) und/oder zusätzlichen mittleren Traversen angeordneten Profilschienen (23, 26) in Industrieöfen verschiebbar gelagert sind.

9. Industrieofen nach Anspruch 3,
**dadurch gekennzeichnet,**
daß eine Vielzahl von Rollelementen (36) in seitlich in den Ofenwänden parallel auf gleicher Höhe angeordneten Reihen von Lagerböcken (38) drehbar gelagert sind.

10. Industrieofen nach Anspruch 9,
**dadurch gekennzeichnet,**
daß die Lagerböcke (38) an den Enden von in Durchbrüchen der Ofenwand (39) entfernbar gelagerten Durchführungsrohren (40) angeordnet sind.

11. Industrieofen nach Anspruch 10,
**dadurch gekennzeichnet,**
daß die Durchführungsrohre (40) in in die Durchbrüche eingesetzten rechteckigen Muffeln (41) gelagert sind, daß die Durchführungsrohre (40) einen geringeren Durchmesser aufweisen, als die lichte Höhe der Muffeln (41),
und daß die Durchführungsrohre (40) wenigstens im Bereich der Lagerböcke (38) mittels unter ihnen angeordneten, zueinander verschiebbaren Keilen (42, 43) aus einer oben in der Muffel liegenden Position in eine tiefer als diese liegende Position und umgekehrt bewegbar sind.

12. Industrieofen nach Anspruch 3,
**dadurch gekennzeichnet,**
daß eine Vielzahl von zylindrischen Rollelementen (31) mit Durchgangsbohrungen (33) jeweils in einem Abstand voneinander auf in Industrieöfen verlaufenden Schienen (32) angeordnet sind,
daß zwischen jeweils zwei Rollelementen Verbindungsglieder (34) angeordnet sind, die an ihren Enden in die Durchgangsbohrungen (33) eingreifen, und daß die derart kettenförmig zusammengefaßten Rollelemente (31) an den Enden der Schienen (32) umgelenkt werden und unterhalb dieser wieder zurückgeführt werden, wodurch eine umlaufende Rollenkette gebildet wird.

13. Industrieofen nach Anspruch 3,
**dadurch gekennzeichnet,**
daß mehrere Rollelemente (55) in einem oben offenen Gehäuse (57) um eine in dem Gehäuse (57) angeordnete, wenigstens oben teilweise gerade und an den Seiten abgerundete Laufbahn angeordnet sind,
daß zwischen jeweils zwei Rollelementen (55) zylindrische, achsparallel ausgerichtete Distanzkörper (56) angeordnet sind,
und daß in dem offenen Bereich des Gehäuses (57) stets mindestens zwei Rollelemente (55) in gleicher Höhe über dieses vorstehen und die Auflage für Brenngutträger (68) bilden,
und daß an den Wänden des Industrieofens in gleicher Höhe mehrere Gehäuse (57) angeordnet sind.

14. Industrieofen nach einem der vorhergehenden Ansprüche,
**dadurch gekennzeichnet,**
daß die Brennkammer oder die Brennkammern (133) auf einem Gerüst (132) auf dem Boden (131) stehen, und daß der Raum (136) unterhalb der Brennkammern (133) begehbar ist.

15. Industrieofen nach Anspruch 14,
**dadurch gekennzeichnet,**
daß der Ofenboden in Segmente (134) aufgeteilt ist, und daß die Segmente (134) auf Laufflächen wie Gleitschienen (140) entlang des Gerüstes (132) verschiebbar sind.

16. Industrieofen nach Anspruch 1,
**dadurch gekennzeichnet,**
daß das Brenngut (105, 118) mit Aussparungen oder Vorsprüngen in einen oder mehrere, ggf. profilierte Balken (108) eingehängt ist.

17. Industrieofen nach Anspruch 1,
**dadurch gekennzeichnet,**
daß die Profilschienen (119) mittels einem oder mehreren Zwischenträgern (113) oder Verbindungselementen im oberen Bereich der Ofeninnenwände, Zwischenelemente oder an der Ofendecke (110) selbst aufgehängtsind.

## Claims

1. An industrial furnace with roller elements and associated conveying surfaces for conveying bars or pallets carrying material for firing, in which the roller elements (1, 6, 11, 16, 22, 31, 36) are made of high temperature ceramics such as silicon carbide, silicon carbide alloy, aluminium oxide or any other comparable material, or a high temperature resistant steel or steel alloy, and are cylindrical or spherical in shape, characterised in that the roller elements and the associated conveying surfaces for the bars or pallets are positioned alongside the inner walls of the furnace, and in that at least one conveying surface has an L- or H-shape profile for lateral control of the roller elements.

2. An industrial furnace as in Claim 1 characterised in that the conveying surfaces are rails positioned on the inner walls of the furnace and in that the roller elements are integral with the undersides of the bars or pallets.

3. An industrial furnace as in Claim 1 characterised in that the conveying surfaces are on the undersides of the bars or pallets and in that the roller elements are positioned on the inner walls of the furnace.

4. An industrial furnace as in Claim 1 characterised in that at least two firing channels are positioned adjacent one another, separator elements such as support frames being located between the firing channels, and in that the conveying surfaces are positioned both along the inner walls of the furnace and along the separator elements.

5. An industrial furnace as in Claim 1 characterised in that a plurality of roller elements (6, 11, 16) are positioned so as to be capable of moving freely in a longitudinal direction between at least two parallel rails (7, 12, 19) each having a U-shape profile and extending at the same height along the length of an industrial furnace with the lateral arms of the said rails pointing upwards, in that the pallets (10, 15) rest on the roller elements (6, 11, 16), and in that spacer elements in the form of disks (18), balls or cylindrical bodies (17) are arranged between the roller elements (16), the height of the said spacer elements being less than half the diameter of the roller elements (16).

6. An industrial furnace as in Claim 5 characterised in that the roller elements (16) are conveyed from the furnace at the furnace exit by means of rails (84) which are enclosed on all sides, and are returned to the furnace entrance in a continuous cycle.

7. An industrial furnace as in Claim 1 characterised in that the roller elements (1, 36) include axial through holes (2) into which are inserted axles (3, 37) or hollow axles.

8. An industrial furnace as in Claim 7 characterised in that the axles of at least two roller elements (22) are mounted laterally on the underside of pallets (29) or bars by means of which roller elements (22) are arranged on each of the inwardly facing sides of the furnace, and in that the pallets (29) or bars, together with the roller elements (22) are mounted so as to be capable of moving along shaped rails (23, 26) laterally positioned in the walls (25, 28) of the industrial furnace and/or along additional centrally-located cross beams.

9. An industrial furnace as in Claim 3 characterised in that a plurality of roller elements (36) is rotatably mounted in a series of parallel supporting blocks (38) which are arranged at the same height in the side walls of the furnace.

10. An industrial furnace as in Claim 9 characterised in that the supporting blocks (38) are positioned on the ends of lead-in pipes (40) which are retractably mounted in openings in the furnace wall (39).

11. An industrial furnace as in Claim 10 characterised in that the lead-in pipes (40) are mounted in rectangular muffles (41) inserted into the openings, the said lead-in pipes (40) being of a smaller diameter than the clearance height of the muffles (41) and being movable from an upper position in the muffle to a position below the said first position and vice versa, at least in the region of the supporting blocks (38) and by means of underlying wedges (42, 43) which can be slid together.

12. An industrial furnace as in Claim 3 characterised in that a plurality of cylindrical roller elements (31) with through holes (33), in each case at a clearance distance from each other, are positioned on rails (32) running within the industrial furnace, connecting members (34) being arranged between two roller elements in each case which engage in the through holes (33) at their ends, and in that the roller elements (31) that are linked together in this way in the form of a chain are turned around at the ends of the rails (32) and directed back beneath the said rails to form a cyclic roller chain.

13. An industrial furnace as in Claim 3 characterised in that a plurality of roller elements (55) are arranged around a circuit located within a casing (57) which is open at the top, the said circuit being partially straight, at least on its upper section, and rounded at the sides, cylindrical spacer bodies (56) which are aligned parallel to the axis being, in each case, arranged between two roller elements (55) and where there are always at least two roller elements (55) in the open part of the casing (57) protruding at the same height above the said casing and forming the seat for the firing material carriers (68), several casings (57) being arranged at the same height on the walls of the industrial furnace.

14. An industrial furnace as in any one of the preceding claims characterised in that the firing chamber or firing chambers (133) stand on a support frame (132) positioned on the floor (131), the space (136) beneath the firing chambers (133) being accessible on foot.

15. An industrial furnace as in Claim 14 characterised in that the furnace floor is divided up into segments (134) which can be moved along the casing (132) on conveyor surfaces such as slide rails (140).

16. An industrial furnace as in Claim 1 characterised in that the material (105, 118) for firing is suspended by means of recesses or projections from one or a plurality of appropriately shaped bars (108).

17. An industrial furnace as in Claim 1 characterised in that the shaped rails (119) are suspended by means of one or a plurality of intermediate brackets (113) or connecting elements in the upper part of the inner walls of the furnace, or by means of intermediate elements, or on the ceiling of the furnace (110) itself.

## Revendications

1. Four industriel, comportant des éléments de roulement et des surfaces de roulement correspondantes, pour le transport de poutres ou de palettes portant des produits à brûler, les éléments de roulement (1, 6, 11, 16, 22, 31, 36) étant constitués d'une céramique à haute température, telle que le carbure de silicium, un composé du carbure de silicium, un oxyde d'aluminium ou un matériau comparable, ou encore d'un acier résistant aux hautes températures, ou d'un alliage, et présentant une forme cylindrique ou sphérique, caractérisé en ce que les éléments de roulement et les surfaces de roulement correspondantes, destinées à des poutres ou à des palettes, sont disposés latéralement contre les parois intérieures du four, et qu'au moins une surface de roulement possède un profil en L ou en H assurant le guidage latéral des éléments de roulement.

2. Four industriel selon la revendication 1, caractérisé en ce que les surfaces de roulement sont des rails qui sont disposés contre les parois intérieures du four, et que les éléments de roulement sont intégrés dans les faces inférieures des poutres ou des palettes.

3. Four industriel selon la revendication 1, caractérisé en ce que les surfaces de roulement sont disposées contre les faces inférieures des poutres ou des palettes, et que les éléments de roulement sont disposés contre les parois intérieures du four.

4. Four industriel selon la revendication 1, caractérisé en ce qu'au moins deux gaines de combustion sont disposées l'une à côté de l'autre, que des éléments séparateurs, tels que des cadres, se trouvent entre les gaines de combustion, et que les surfaces de roulement sont disposées le long des parois intérieures du four et des éléments séparateurs.

5. Four industriel selon la revendication 1, caractérisé en ce qu'un grand nombre d'éléments de roulement (6, 11, 16) sont disposés, de façon à pouvoir subir un déplacement longitudinal libre, dans au moins deux rails profilés (7, 12, 19), en U, courant parallèlement et à même hauteur le long de la longueur d'un four industriel, rails profilés dont les branches sont dirigées vers le haut ; que des palettes (10, 15) s'appuient sur les éléments de roulement (6, 11, 16) ; et que des pièces d'écartement, sous forme de disques (18), de rotules ou de corps cylindriques (17), dont la hauteur est inférieure à la moitié du diamètre des éléments de roulement (16), sont disposés entre les éléments de roulement (16).

6. Four industriel selon la revendication 5, caractérisé en ce que les éléments de roulement (16) sont insérés à la sortie du four, dans des rails (84) fermés sur tous les côtés, et sont ramenés à l'entrée du four, de façon qu'il se crée un circuit fermé continu.

7. Four industriel selon la revendication 1, caractérisé en ce que les éléments de roulement (1, 36) comportent des trous traversants axiaux (2), et que des axes (3, 37) ou des axes creux sont insérés dans les trous traversants (2).

8. Four industriel selon la revendication 7, caractérisé en ce que les axes d'au moins deux éléments de roulement (22) sont logés latéralement contre la face inférieure de palettes (29) ou de poutres, chaque élément de roulement (22) étant disposé contre chaque face dirigée contre la paroi du four, et que les palettes (29) ou les poutres comportant les éléments de roulement (22) sont logées sur des rails profilés (23, 26) de fours industriels, ces rails étant disposés latéralement dans les parois (25, 28) et/ou dans des traverses centrales supplémentaires.

9. Four industriel selon la revendication 3, caractérisé en ce qu'un grand nombre d'éléments de roulement 36 sont logés en rotation dans des rangées de paliers (38), disposées latéralement dans les parois du four, parallèlement et à même hauteur.

10. Four industriel selon la revendication 9, caractérisé en ce que les paliers (38) sont disposés aux extrémités de tubes traversants (40), logés d'une manière amovible dans des percées aménagées dans la paroi du four (39).

11. Four industriel selon la revendication 10, caractérisé en ce que les tubes traversants (40) sont logés dans des moufles rectangulaires (41), insérés dans les percées ; que les tubes traversants (40) ont un diamètre plus petit que la hauteur libre des moufles (41) ; et que les tubes traversants (40) peuvent se déplacer, au moins dans la zone des paliers (38), à l'aide de cales (42, 43) disposées en-dessous d'eux et pouvant coulisser l'un vers l'autre, d'une position se trouvant en haut dans le moufle, jusqu'à une position située plus bas que cette dernière, et inversement.

12. Four industriel selon la revendication 3, caractérisé en ce qu'un grand nombre d'éléments de roulement cylindriques (31), comportant des trous traversants (33), sont disposés à une certaine distance les uns des autres, sur des rails (32) courant dans les fours industriels ; que des éléments d'assemblage (34) sont disposés entre chaque paire d'éléments de roulement, éléments d'assemblage qui, en leurs extrémités, pénètrent dans les trous traversants (33) ; et que les éléments de roulement (31), ainsi réunis en une chaîne, sont déviés aux extrémités des rails (32) et sont ramenés en-dessous de ces derniers, ce qui forme une chaîne continue d'éléments de roulement.

13. Four industriel selon la revendication 3, caractérisé en ce que plusieurs éléments de roulement (55) sont disposés dans une enveloppe (57) ouverte vers le haut, autour d'une voie de roulement, disposée dans l'enveloppe (57), partiellement rectiligne au moins à la partie supérieure, et arrondie sur les côtés ; que des éléments écarteurs (56), cylindriques, dont les axes sont parallèles les uns aux autres, sont disposés entre les deux éléments de roulement (55) appartenant à chaque paire d'éléments de roulement ; et que, dans la zone ouverte de l'enveloppe (57), au moins deux éléments de roulement, à même hauteur, dépassent toujours de cette enveloppe, et forment l'appui destiné au support du produit à brûler (68) ; et que plusieurs enveloppes (57) sont disposées à la même hauteur contre les parois du four industriel.

14. Four industriel selon l'une des revendications précédentes, caractérisé en ce que la chambre de combustion ou les chambres de combustion (133) se dressent sur un cadre (132) disposé sur le fond (131), et que l'espace (136) situé en-dessous des chambres de combustion (133) est praticable.

15. Four industriel selon la revendication 14, caractérisé en ce que le fond du four est subdivisé en segments (134), et que les segments (134) peuvent se déplacer sur des surfaces de roulement, telles que des rails de glissement (140), le long du cadre (132).

16. Four industriel selon la revendication 1, caractérisé en ce que le produit combustible (105, 118) est, avec des évidements ou des saillies, suspendu à une ou plusieurs poutres (108), éventuellement profilées.

17. Four industriel selon la revendication 1, caractérisé en ce que les rails profilés (119) sont suspendus à l'aide d'un ou plusieurs supports intermédiaires (113) ou éléments d'assemblage dans la zone supérieure des parois intérieures du four, des éléments intermédiaires ou contre le plafond du four (110).
